# EUROPÄISCHE PATENTSCHRIFT

(11) **EP 1 400 472 B1**
(45) Veröffentlichungstag und Bekanntmachung des Hinweises auf die Patenterteilung: **23.08.2006**
(21) Anmeldenummer: 02405817.4
(22) Anmeldetag: 23.09.2002
(51) Int. Cl.: B65H 19/12

(54) **Transportanlage für Papierrollen, Verfahren zu ihrem Betrieb sowie Fahrzeug**
Transport installation for paper rolls, method for operation and trolley
Installation de transport pour des rouleaux en papier, procédé pour le fonctionnement et chariot

(43) Veröffentlichungstag der Anmeldung: 24.03.2004
(73) Patentinhaber: Metso Paper AG, 2800 Delémont (CH)
(72) Erfinder: Brändli, Walter, 4242 Laufen (CH); Allemann, Hugo, 2564 Bellmund (CH)
(74) Vertreter: Wagner, Wolfgang Heribert

(56) Entgegenhaltungen:
- DE-A- 2 334 141
- DE-A- 2 554 962
- DE-A- 19 860 475
- GB-A- 2 181 117
- US-A- 5 261 331
- US-A- 6 155 516

## Beschreibung

### Technisches Gebiet

Die Erfindung betrifft eine Transportanlage zur Zuführung von Papierrollen zu mindestens einem Rollenständer, wie sie vor allem in Druckereien eingesetzt werden sowie ein Verfahren zum Betrieb derselben.

### Stand der Technik

Gattungsgemässe Anlagen und Verfahren zu ihrem Betrieb sind seit langem bekannt, s. z.B. US-A-5 076 751. Dabei werden auf dem Beschickungsgeleise und dem Geleiseabschnitt z.B. Förderanlagen wie in der EP-A-0 587 015 beschrieben eingesetzt, bei welcher der die Rolle tragende Wagen mit einer Förderkette, die längs des Geleises umläuft, reibschlüssig eingreift. Für ähnlich aufgebaute Anlagen mit schienengeführten angetriebenen Wagen für den Rollentransport wird auf DE-A-198 60 475, GB-A-2 181 117 und US-A-6 155 516 verwiesen. Andere Transportanlagen für die Zuführung von Papierrollen zu Rollenständern sind als führerlose Transportsysteme (FTS) bekannt. Sie umfassen angetriebene steuerbare Wagen (s. z.B. EP-A-0 334 366), die im Boden verlegten Drähten folgen und z.B. durch eine Batterie mit Energie versorgt und über Funk gesteuert werden. DE-A-23 34 141 zeigt ein Fahrzeug mit zwei Paaren von Rädern, das dem Verschieben von Brenngut tragenden Wagen in einer Brennerei auf einer überflur verlegten Schienenanlage dient. Es eignet sich jedoch kaum für den Einsatz in einer erfindungsgemässen Anlage. Da eine Papierrolle ein beträchtliches Gewicht aufweist, aber, weil sie nicht auf dem angetriebenen Fahrzeug aufliegt, nichts zum Anpressdruck der angetriebenen Räder beiträgt, ist eine ausreichende Traktion nicht unbedingt gewährleistet.

Anlagen der erstgenannten Art können ganz oder teilweise mit Förderketten ausgerüstet sein, wobei die Wagen über nicht mit solchen versehene Anlagenteile manuell verschoben werden. Die Ausrüstung mit Förderketten ist verhältnismässig aufwendig. Schiebebühnen, gegebenenfalls auch Drehscheiben müssen mit separaten Förderketten und entsprechenden Antrieben versehen sein, so dass gerade die automatische Beschickung der Rollenständer, die besonders erwünscht ist, da die Umgebung der Rollenständer einen Gefahrenbereich darstellt, verhältnismässig viel Aufwand erfordert. Bei Anlagen der zweitgenannten Art fallen die Kosten für die Antriebe und Steuerungen beträchtlich ins Gewicht, vor allem, wenn eine grössere Anzahl von Wagen eingesetzt wird.

### Darstellung der Erfindung

Der Erfindung liegt die Aufgabe zu Grunde, eine gattungsgemässe Transportanlage anzugeben, bei welcher Aufwand und Kosten sowohl für die Geleise als auch für die Wagen verhältnismässig gering sind. Diese Aufgabe wird durch die Merkmale im Kennzeichen des Anspruchs 1 gelöst.

Bei der erfindungsgemässen Anlage sind aufwendige Fördereinrichtungen in den Geleisen nicht erforderlich. Zugleich kann die Zahl der verhältnismässig kostspieligen Antriebe und Steuerungen gering gehalten werden. Im allgemeinen entspricht sie der Zahl der Rollenständer, während die Zahl der Wagen wesentlich höher sein kann, so dass es z.B. möglich ist, verhältnismässig viele Rollen vorzubereiten und auf Wagen zwischenzulagern. Vorzugsweise werden Fahrzeuge eingesetzt, bei denen die antreibbaren Räder unabhängig vom Fahrzeuggewicht fest gegen die Schienen gedrückt werden, so dass ein ausreichender Reibschluss gewährleistet ist. Besonders günstig ist die erfindungsgemässe Ausbildung bei Transportanlagen, bei welchen lediglich die Rollenständer automatisch beschickt werden, während im übrigen der Rollentransport mittels manuell angetriebener Wagen erfolgt.

Es wird auch ein geeignetes Verfahren zum Betrieb der erfindungsgemässen Transportanlage angegeben.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: eine Draufsicht auf eine erfindungsgemässe Transportanlage,
- Fig. 2: eine Seitenansicht eines erfindungsgemässen Fahrzeugs,
- Fig. 3: einen Längsschnitt durch einen Endabschnitt eines Fahrzeugs und einen anstossenden Endabschnitt eines an dasselbe gekuppelten Wagens,
- Fig. 4: eine Vorderansicht des Fahrzeugs nach Fig. 2 sowie einen Schnitt durch ein Geleise, auf dem dasselbe verfahrbar ist und
- Fig. 5a-o: die Zufuhr einer neuen Papierrolle zu einem Rollenständer mittels der erfindungsgemässen Transportanlage einschliesslich der Entfernung einer Hülse oder Restrolle, die gegen sie ausgewechselt wird. Dabei zeigt

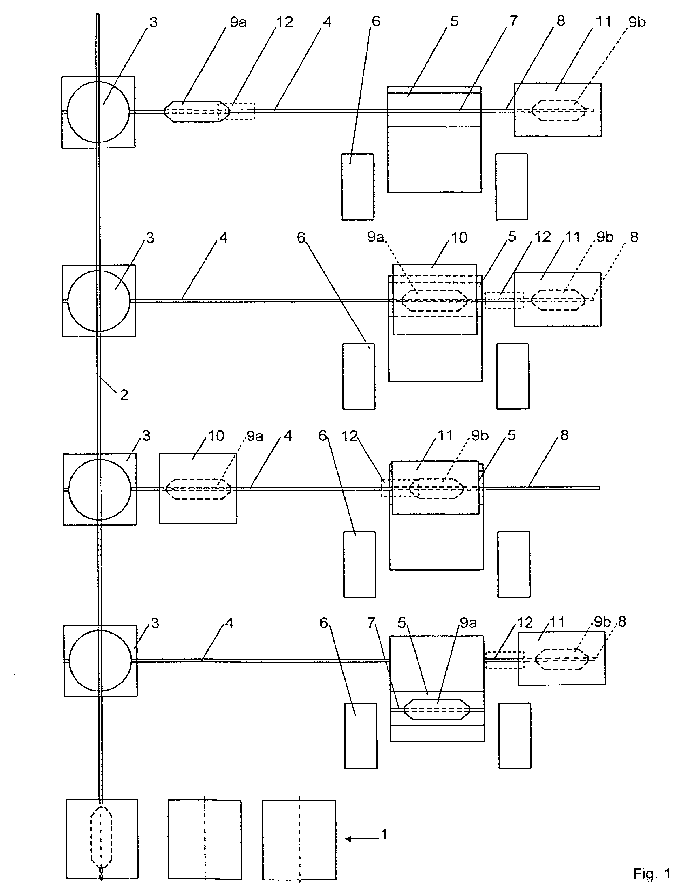

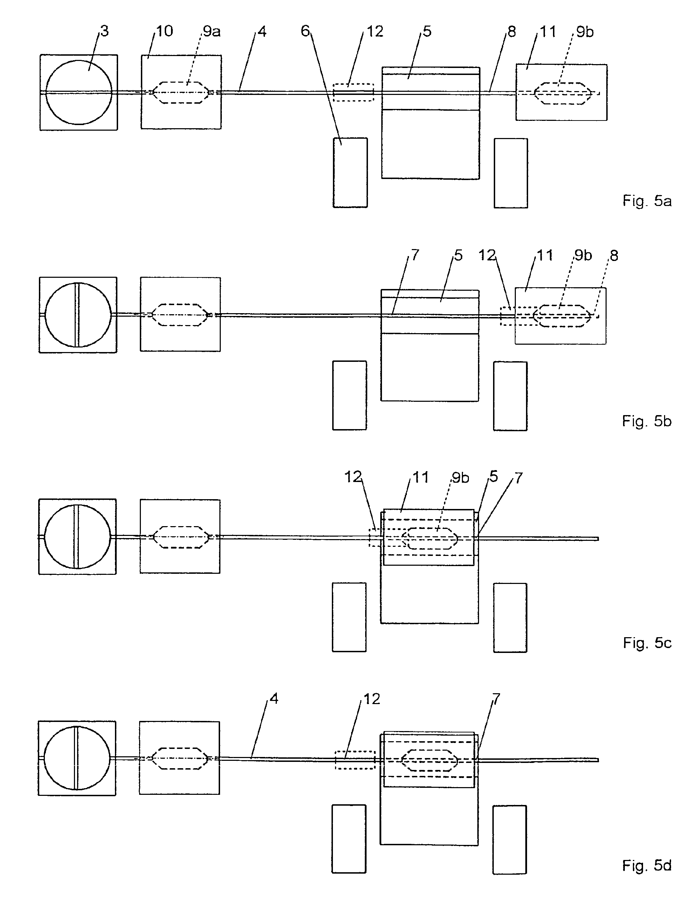

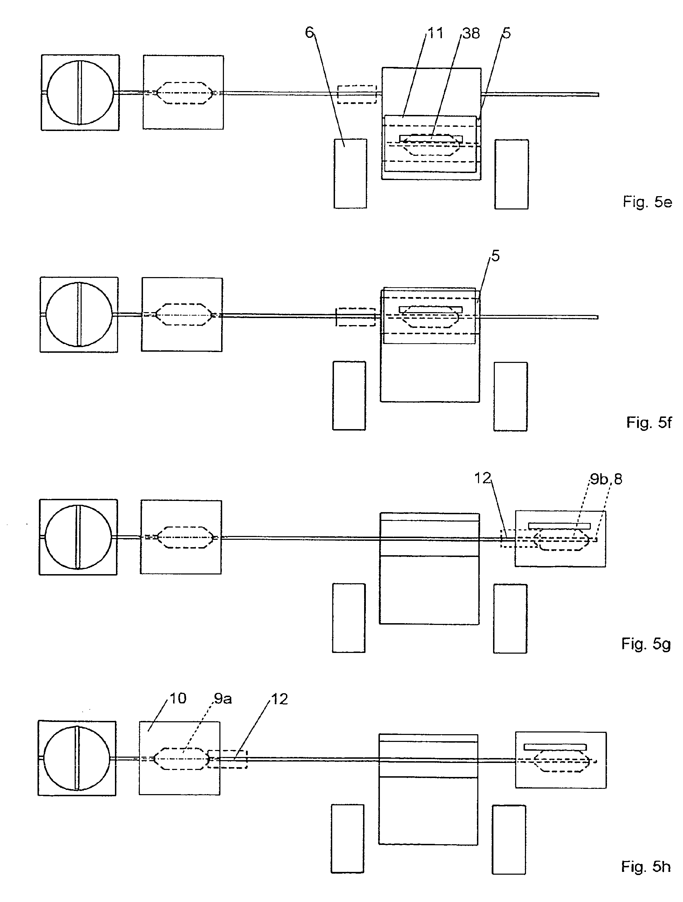

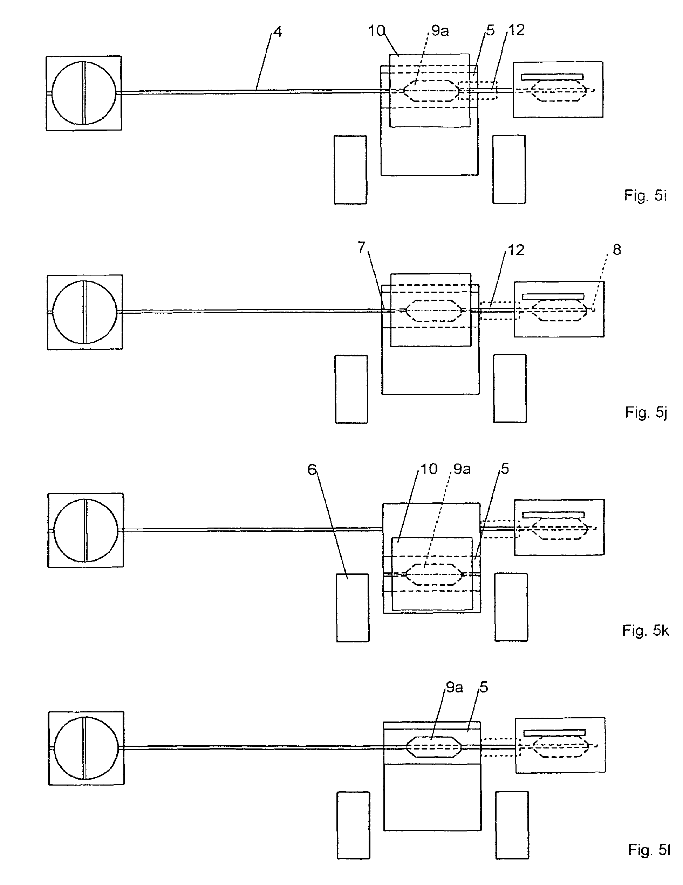

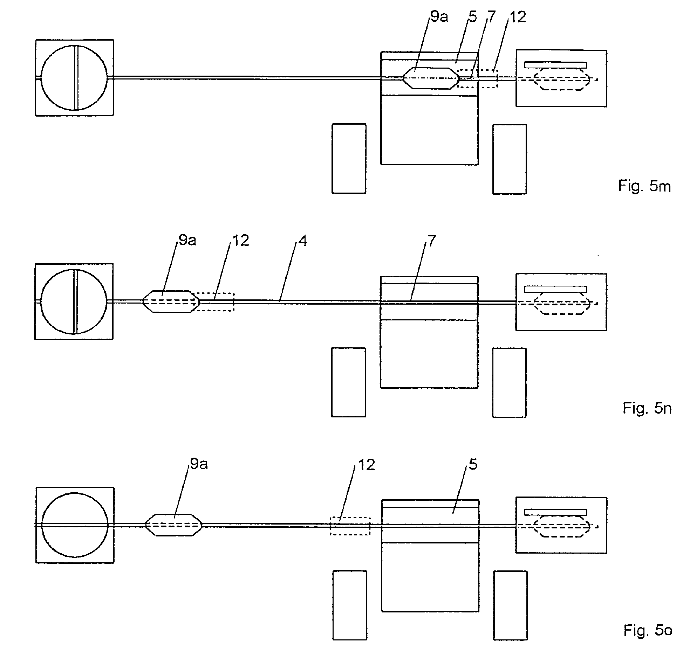

- Fig. 5a: einen Teil der erfindungsgemässen Transportanlage nach Fig. 1 zu Beginn der Rollenzufuhr,
- Fig. 5b: den Anlagenteil von Fig. 5a nach einem ersten Schritt der Rollenzufuhr,
- Fig. 5c: den Anlagenteil von Fig. 5a nach einem zweiten Schritt der Rollenzufuhr,
- Fig. 5d: den Anlagenteil von Fig. 5a nach einem dritten Schritt der Rollenzufuhr,
- Fig. 5e: den Anlagenteil von Fig. 5a nach einem vierten Schritt der Rollenzufuhr,
- Fig. 5f: den Anlagenteil von Fig. 5a nach einem fünften Schritt der Rollenzufuhr,
- Fig. 5g: den Anlagenteil von Fig. 5a nach einem sechsten Schritt der Rollenzufuhr,
- Fig. 5h: den Anlagenteil von Fig. 5a nach einem siebenten Schritt der Rollenzufuhr,
- Fig. 5i: den Anlagenteil von Fig. 5a nach einem achten Schritt der Rollenzufuhr,
- Fig. 5j: den Anlagenteil von Fig. 5a nach einem neunten Schritt der Rollenzufuhr,
- Fig. 5k: den Anlagenteil von Fig. 5a nach einem zehnten Schritt der Rollenzufuhr,
- Fig. 51: den Anlagenteil von Fig. 5a nach einem elften Schritt der Rollenzufuhr,
- Fig. 5m: den Anlagenteil von Fig. 5a nach einem zwölften Schritt der Rollenzufuhr,
- Fig. 5n: den Anlagenteil von Fig. 5a nach einem dreizehnten Schritt der Rollenzufuhr und
- Fig. 5o: den Anlagenteil von Fig. 5a am Ende der Rollenzufuhr.

### Wege zur Ausführung der Erfindung

Die erfindungsgemässe Transportanlage umfasst (Fig. 1) ein Papierrollenlager, insbesondere ein Zwischenlager 1 zur Aufnahme ausgepackter und mit Klebestellen versehener, also für den Rollenwechsel vorbereiteter Papierrollen, von dem ein gerades Zubringgeleise 2 über mehrere Drehscheiben 3 führt, an welchen jeweils ein Beschickungsgeleise 4 rechtwinklig abzweigt, das zu einer Schiebebühne 5 oder einer Schiebehebebühne eines Rollenständers 6 führt. Wenn sich die Schiebebühne 5 in einer Uebernahmeposition befindet, so fluchtet das Beschickungsgeleise 4 auf der Zufuhrseite der Schiebebühne 5 mit einem Geleiseabschnitt 7 auf derselben. Auf der der Zufuhrseite abgewandten Seite schliesst ein mit dem Beschickungsgeleise 5 fluchtendes Abstellgeleise 8 an.

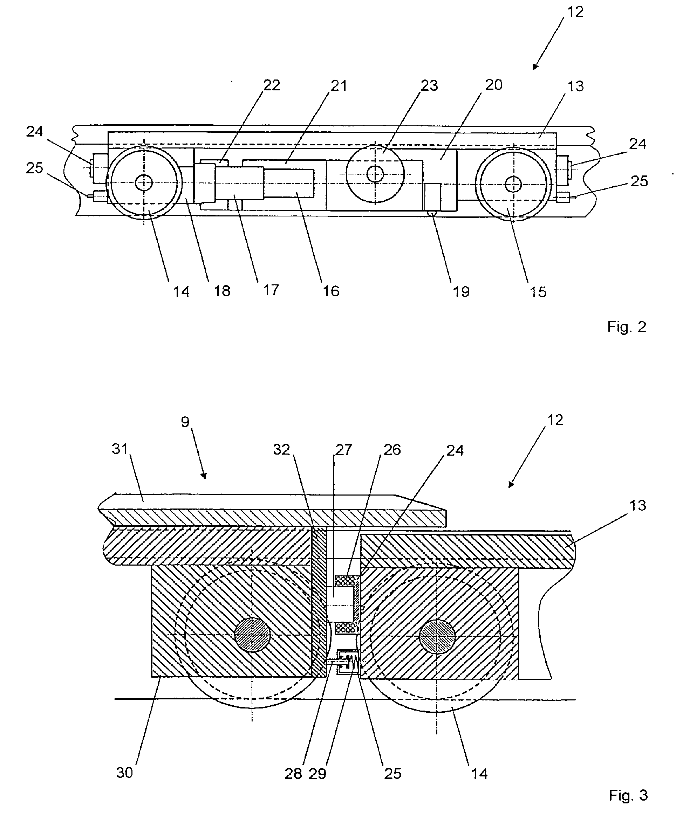

Auf jedem der Beschickungsgeleise 4 ist ein antriebsloser Wagen 9a verfahrbar, welcher eine Papierrolle 10 aufnehmen kann und auf einem weiteren antriebslosen Wagen 9b, der gewöhnlich auf dem Abstellgeleise 8 abgestellt ist, ist ein Hülsenkorb 11 zur Aufnahme von Hülsen aufgebrauchter Papierrollen angeordnet. Zwischen den beiden Wagen 9a, 9b ist ein Fahrzeug 12 auf dem Beschickungsgeleise 4, dem Geleiseabschnitt 7 und dem Abstellgeleise 8 verfahrbar, welches sowohl an den dem Papierrollentransport dienenden Wagen 9a als auch an den den Hülsenkorb 11 tragenden Wagen 9b ankuppelbar ist. Das Fahrzeug 12 weist (Fig. 2-4) einen Rahmen 13 auf, an dessen Unterseite in der Nähe beider Enden jeweils ein Paar von Rädern 14; 15 gelagert ist. Die das Räderpaar 14 tragende Achse wird von einem Elektromotor 16 über ein Untersetzungsgetriebe 17 und ein Winkelgetriebe 18, die an der Unterseite des Rahmens 13 aufgehängt sind, angetrieben. Der Elektromotor 16 wird über Stromabnehmer 19 und ein Leistungsteil 20 mit einem Umrichter mit Strom versorgt und von einem Steuerteil 21 gesteuert. Ein Merker 22 dient der Feststellung der Position des Fahrzeugs 12, wie weiter unten noch näher erläutert werden wird. Etwa in der Mitte des Fahrzeugs 12 ist im Rahmen ein Paar von Anpressrädern 23 gelagert, welches in einer unbelasteten Grundposition die Räder 14, 15 etwas überragt, aber gegen eine elastische Rückstellkraft nach unten gedrückt werden kann. An beiden Enden des Rahmens 13 sind pufferartige schaltbare elektromagnetische Kupplungselemente 24 zum Ankuppeln an Wagen angebracht. Unterhalb der Kupplungselemente 24 sind als Taster 25 ausgebildete Sensoren angebracht, welche feststellen, ob ein Wagen 9 an das Fahrzeug 12 angekuppelt ist oder nicht. Die elektromagnetischen Kupplungselemente 24 weisen (Fig. 3) jeweils eine Wicklung 26 auf, welche einen vorstehenden Kern 27 mit einer ebenen Kontaktfläche am Ende umgibt. Sie liegt gegebenenfalls an einer Stirnfläche am Gehäuse des angekuppelten Wagens 9 an. Der Taster 25 umfasst einen Stift 28, der vom angekuppelten Wagen 9 gegen die Kraft einer Druckfeder 29 in einer zurückgeschobenen Position festgehalten wird.

Der Wagen 9 ist in an sich bekannter Weise ausgebildet mit einem unterflur auf dem Geleise verfahrbaren Fahrgestell 30 und einer überflur angeordneten Mulde 31 zur Aufnahme einer Papierrolle oder eines Hülsenkorbs etc., welche mittels eines Steges mit dem Fahrgestell 30 verbunden ist. Sie können insoweit dem in der EP-A-0 587 015 beschriebenen Wagen entsprechen. Das Fahrgestell 30 weist an beiden Enden zur Längsrichtung normale, von einer aus ferromagnetischem Material bestehenden Stirnwand 32 gebildete Stirnflächen auf, an welchen die Kupplungselemente 24 des Fahrzeugs 12 angreifen können.

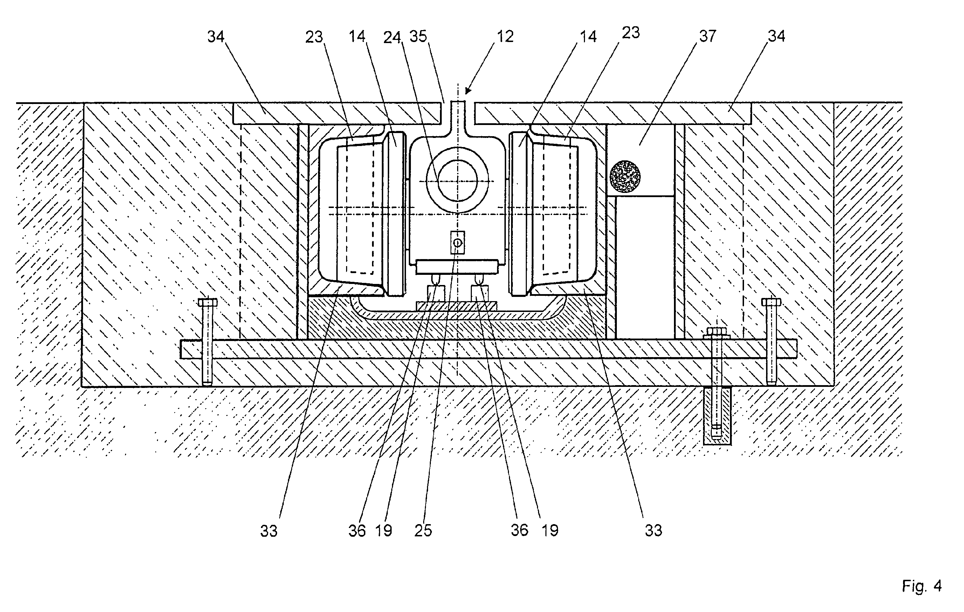

Das Geleise ist unterflur verlegt und umfasst (Fig. 4) in an sich bekannter Weise zwei Schienen 33, welche als gegeneinander weisende U-Profile ausgebildet sind, welche über Stützprofile und Schwellen am Boden eines Grabens abgestützt sind. Es ist mit Beton vergossen und durch auf den Schienen 33 aufliegende Abdeckbleche 34 abgedeckt, die lediglich einen schmalen, mittig oberhalb der Schienen 25 liegenden Spalt 35 frei lassen. Die Innenseiten der unteren Flansche der Schienen 33 bilden Laufflächen, auf denen die Räder 14, 15 laufen, während die Anpressräder 23 elastisch gegen die Innenseiten der oberen Flansche drücken, so dass die angetriebenen Räder 14 gegen die Laufflächen gepresst werden und zuverlässigen Reibschluss mit den Schienen 33 haben. Die Durchmesser der Räder 14, 15 und der Anpressräder 23 sind vorzugsweise gleich und nur wenig kleiner als der Abstand zwischen den Flanschen der Schienen 33. Mittig zwischen den Laufflächen sind zwei Stromschienen 36 verlegt, mit welchen die Stromabnehmer 19 in Kontakt stehen. Aussen an eine der Schienen 33 anschliessend verläuft parallel zu denselben ein Kabelkanal 37. Das Fahrzeug 12 liegt im wesentlichen zwischen den Schienen 33 und ragt nicht über die Abdeckbleche 34 hinaus, so dass Kollisionen mit auf dem Boden liegenden Objekten oder mit Personen nicht zu befürchten sind.

Die Steuerung der Fahrzeuge 12 kann im wesentlichen durch eine stationäre Steuereinheit erfolgen, während das Steuerteil 21 jeweils nur elementare Funktionen ausführt. Die Position des Fahrzeugs wird überwacht, indem der Merker 22 durch aktive Sensoren am Geleise detektiert wird. In vielen Fällen genügt es, wenn jeweils nur die Anwesenheit des Fahrzeugs 12 an bestimmten Haltepunkten und sonstigen Schaltpunkten detektiert wird. Andererseits kann die Position des Fahrzeugs auch ständig von der Steuereinheit nachgeführt werden, z.B. durch Berechnung des Fahrweges aufgrund einer Ueberwachung der Radumdrehungen, wobei die Detektionen lediglich Neueichungen der Position bewirken. In diesem Fall genügt unter Umständen auch ein einziger Sensor, der regelmässig passiert wird und dann jeweils eine Neueichung auslöst.

Statt des Merkers 22 kann auch ein aktiver Sensor vorgesehen sein, während am Geleise lediglich Merker angebracht sind, die vom Sensor detektiert werden. Die Merker können eindeutig gekennzeichnet oder auch ununterscheidbar, nur an bestimmten Punkten oder in regelmässigen Abständen angebracht sein. Die Detektionen können über die Stromschienen, über Funk oder einen modulierten Infrarotstrahl vom Fahrzeug an die Steuereinheit gemeldet werden. Denkbar ist auch eine Positionsüberwachung durch einen Messstrahl im Geleise, der mit einem Reflektor am Fahrzeug wechselwirkt, doch darf dann der Querschnitt des Fahrzeugs wie der Wagen den Messstrahl zwischen Sender und Reflektor nicht behindern, ausserdem erfordert die Positionsüberwachung auf dem Geleiseabschnitt 7 der Schiebebühne 5 einigen zusätzlichen Aufwand.

Das Fahrzeug 12 kann in bestimmten Fahrzuständen sein wie 'halten', 'vorwärts langsam', 'vorwärts schnell', 'rückwärts langsam', 'rückwärts schnell', wobei 'schnell' z.B. 0,2m/sec entsprechen kann und 'langsam' etwa ein Fünftel davon. Es kann dabei jeweils von der Steuereinheit durch einen spezifischen Umschaltbefehl in einen bestimmten Fahrzustand geschaltet werden, in dem es bis zum Empfang eines weiteren Umschaltbefehls verbleibt. Oder es kann so lange in einem Zustand bleiben, wie es periodisch entsprechende Befehle empfängt und in einen Grundzustand wie 'halten' fallen, wenn die Befehle aufhören.

Das Fahrzeug 12 kann im Normalfall 'schnell' verfahren werden, aber bei Passieren eines einem anzufahrenden Haltepunkt vorgelagerten Sensors auf 'langsam' umgeschaltet werden, so dass es, sobald der Merker 22 durch einen weiteren Sensor am Haltepunkt detektiert und Umschaltung auf 'halten' ausgelöst wird, fast augenblicklich anhalten kann. Die Befehle können von der Steuereinheit wiederum über die Stromschienen 36, über Funk oder einen modulierten Infrarotstrahl an das Fahrzeug 12 übermittelt werden. Falls das Fahrzeug einen aktiven Sensor trägt, können bestimmte Uebergänge wie z.B. 'vorwärts langsam' - 'halten' oder 'vorwärts schnell' - 'vorwärts langsam' auch unmittelbar durch Signale desselben ausgelöst werden, wenn er etwa auf einen Haltepunkt bzw. einen demselben vorgeordneten Schaltpunkt anspricht.

Statt über Stromschienen kann das Fahrzeug auch auf beliebige andere Weise mit Energie versorgt werden. Es kann etwa einen Energiespeicher tragen, z.B. eine Batterie, so dass keine dauernde Energieübertragung erforderlich ist.

Im folgenden wird anhand der Fig. 5a-o ein Rollenwechsel auf einem der Beschickungsgeleise 4 beschrieben.

Fig. 5a zeigt die Ausgangslage nach einem Rollenwechsel und vor der Auswechslung der Hülse oder Restrolle gegen eine neue Papierrolle. Der zweiarmige Rollenständer 6 trägt eine leere Hülse oder eine nahezu leere Hülse, d.h. eine fast ganz abgelaufene, abgetrennte Restrolle und eine Papierrolle, die eben abgewickelt wird (nicht dargestellt). Auf der Zufuhrseite der Schiebebühne 5 ist in der Nähe der Drehscheibe 3 der Wagen 9a mit der neuen, ausgepackten und mit einer Klebestelle versehenen Papierrolle 10 auf einem Warteplatz des Beschickungsgeleises 4 abgestellt und das Fahrzeug 12 auf einem Haltepunkt neben der Schiebebühne 5, die sich in der Uebernahmeposition befindet. Der Wagen 9b mit dem Hülsenkorb 11 steht auf dem Abstellgeleise 8.

Zur Entfernung der Hülse aus dem Rollenständer fährt zunächst das Fahrzeug 12 'vorwärts schnell' über den Schienenabschnitt 7 der Schiebebebühne 5 auf das Abstellgeleise 8 auf einen Schaltpunkt, wo es auf 'vorwärts langsam' umgeschaltet wird. Mit geringer Geschwindigkeit fährt es mit eingeschalteten Kupplungselementen auf den Wagen 9b auf, welcher den Hülsenkorb 11 trägt und wird auf 'halten' umgeschaltet, sobald der Sensor des vorderen Kupplungselements anspricht (Fig. 5b). Anschliessend fährt das Fahrzeug 12 'rückwärts schnell' auf den Geleiseabschnitt 7 zurück, wo es beim Passieren eines Schaltpunkts auf 'rückwärts langsam' geschaltet wird und so einen Haltepunkt anfährt, an dem es auf 'halten' geschaltet wird und anhält.

Der Wagen 9b steht mit eingemittetem Hülsenkorb 11 auf der Schiebebühne (Fig. 5c). Da der Geleiseabschnitt 7 zu kurz ist, um auch das Fahrzeug 12 ganz aufzunehmen, werden die Kupplungselemente ausgeschaltet und das Fahrzeug 12 'rückwärts schnell' ein kurzes Stück zu einem Haltepunkt auf dem Beschickungsgeleise 4 verfahren, so dass es vom Geleiseabschnitt 7 frei ist (Fig. 5d). Nun wird die Schiebebühne 5 gegen den Rollenständer 6 verschoben, bis der Hülsenkorb 11 unter der Hülse steht, die nun von den Konen des Rollenständers 6 freigegeben wird und in den Hülsenkorb 11 fällt (Hülse 38, Fig. 5e). Die Schiebebühne 5 wird in die Uebernahmeposition zurückverfahren (Fig. 5f) und dann der Wagen 9b vom Fahrzeug 12 wieder auf das Abstellgeleise 8 geschoben (Fig. 5g).

Zur Zuführung der Papierrolle 10 fährt nun das Fahrzeug 12 wieder 'rückwärts schnell' zu einem Schaltpunkt kurz vor dem Halteplatz und dann mit eingeschalteten Kupplungselementen 'rückwärts langsam' weiter, bis es an den Wagen 9a stösst, an denselben ankuppelt und auf 'halten' geschaltet wird (Fig. 5h). Auf 'vorwärts schnell' geschaltet, fährt das Fahrzeug 12 nun mit dem Wagen 9a über das Beschickungsgeleise 4 zurück auf die Schiebebühne 5, wo es wiederum einen Schaltpunkt passiert und, auf 'vorwärts langsam' geschaltet, einen Haltepunkt anfährt, an dem die Papierrolle 10 auf der Schiebebühne 5 zentriert ist (Fig. 5i). Falls die Papierrolle 10 nicht immer genau zentriert auf dem Wagen 9a liegt oder verschiedene Rollenbreiten möglich sind, kann der Durchgang ihrer Vorderkante bzw. der Vorder- und der Hinterkante durch eine Lichtschranke detektiert und nach Erreichen des Haltepunkts noch eine Ausgleichsverschiebung ausgeführt werden.

Das Fahrzeug 12 wird dann abgekuppelt und an einen Haltepunkt auf dem Abstellgeleise 8 verfahren, an dem es vom Geleiseabschnitt 7 frei ist (Fig. 5j). Anschliessend wird die Schiebebühne 5 mit dem Wagen 9a zum Rollenständer 6 hin verschoben und die Papierrolle 10 zwischen den durch den Abwurf der Hülse freigewordenen Konen eingespannt (Fig. 5k) und vom Wagen 9a abgehoben. Die Schiebebühne 5 mit dem Wagen 9a wird dann in die Uebernahmeposition zurückverschoben (Fig. 51). Das Fahrzeug 12 fährt nun mit eingeschalteten Kupplungselementen 24 'rückwärts langsam' auf den Geleiseabschnitt 7 der Schiebebühne 5, bis es an den Wagen 9a stösst und ankuppelt (Fig. 5m). Dann fährt das Fahrzeug 12 'rückwärts schnell' über den Geleiseabschnitt 7 und das Beschickungsgeleise 4 bis an den dem Warteplatz vorgelagerten Schaltpunkt und 'rückwärts langsam', bis es einen Haltepunkt erreicht, derart, dass zugleich der Wagen 9a den Warteplatz einnimmt (Fig. 5n). Die Kupplungselemente werden daraufhin ausgeschaltet und das Fahrzeug 12 auf seinen Haltepunkt neben der Schiebebühne 5 zurückverfahren (Fig. 50). Damit ist der Ausgangszustand wieder erreicht, mit dem Unterschied, dass der Wagen 9a keine Papierrolle trägt.

Der Wagen 9a kann dann manuell verschoben und durch einen mit einer Papierrolle beladenen Wagen erstetzt werden, welcher ebenfalls manuell auf den Warteplatz geschoben wird. Falls die Transportanlage entsprechend ausgerüstet ist, kann der Wagen 9a aber auch auf dem Warteplatz mit einer neuen Papierrolle beladen werden, die etwa mittels einer Krananlage direkt vom Zwischenlager gebracht wird.

Es sind natürlich viele Abwandlungen und Erweiterungen der beschriebenen Anlage möglich. So kann etwa, wenn die Hülsen, sobald der Hülsenkorb voll ist, über die Transportanlage entsorgt werden sollen, parallel zum Abstellgeleise im Verschiebebereich der Schiebebühne ein weiteres Abstellgeleise vorgesehen sein, auf welchem das Fahrzeug vorübergehend abgestellt wird, so dass es aus dem Weg ist und der Wagen mit dem Hülsenkorb manuell über den Geleiseabschnitt und das Beschickungsgeleise zu einer Entsorgungsstation verfahren werden kann.

Die Zufuhr zu den Beschickungsgeleisen kann statt über das Zubringgeleise und die Drehscheiben auch durch einen schiebebühnenartigen Verschiebewagen hergestellt werden, der parallel zur Reihe der Rollenständer verfahrbar ist und einen quer, d.h. zu den Beschickungsgeleise parallel ausgerichteten Geleiseabschnitt trägt, an dessen Ende zum Festhalten eines Wagens an einer Beladeposition ein Kupplungselement und ein Sensor vorgesehen sind, die denen des Fahrzeugs entsprechen. Der in Beladeposition auf dem Verschiebewagen stehende Wagen wird in diesem Fall am Zwischenlager mittels eines Krans oder durch Teleskoparme beladen und dann der Verschiebewagen verfahren, bis dessen Geleiseabschnitt mit einem ausgewählten Beschickungsgeleise fluchtet, worauf das Fahrzeug auf den Geleiseabschnitt fährt, an den Wagen ankuppelt und ihn über das Beschickungsgeleise auf die Schiebebühne zieht. Die Rollenzufuhr aus dem Zwischenlager läuft in diesem Fall automatisch ab.

### Bezugszeichenliste

- 1: Zwischenlager
- 2: Zubringgeleise
- 3: Drehscheibe
- 4: Beschickungsgeleise
- 5: Schiebebühne
- 6: Rollenständer
- 7: Geleiseabschnitt
- 8: Abstellgeleise
- 9, 9a,b: Wagen
- 10: Papierrolle
- 11: Hülsenkorb
- 12: Fahrzeug
- 13: Rahmen
- 14, 15: Räder
- 16: Elektromotor
- 17: Untersetzungsgetriebe
- 18: Winkelgetriebe
- 19: Stromabnehmer
- 20: Leistungsteil
- 21: Steuerteil
- 22: Merker
- 23: Anpressräder
- 24: Kupplungselemente
- 25: Taster
- 26: Wicklung
- 27: Kern
- 28: Stift
- 29: Druckfeder
- 30: Fahrgestell
- 31: Mulde
- 32: Stirnwand
- 33: Schienen
- 34: Abdeckbleche
- 35: Spalt
- 36: Stromschienen
- 37: Kabelkanal
- 38: Hülse

## Patentansprüche

1. Transportanlage zur Zuführung von Papierrollen zu mindestens einem Rollenständer (6), mit mindestens einer Schiebühne (5) mit einem Geleiseabschnitt (7) und einem von einer Zufuhrseite zur Schiebebühne (5) führenden Beschickungsgeleise (4), mit welchem der Geleiseabschnitt (7) fluchtet, wenn sich die Schiebebühne (5) in einer Uebernahmeposition befindet sowie mit mindestens einem antriebslosen Wagen (9a) zur Aufnahme einer Papierrolle (10), **dadurch gekennzeichnet, dass** sie mindestens ein angetriebenes Fahrzeug (12) umfasst, welches auf dem Beschickungsgeleise (4) und dem Geleiseabschnitt (7) verfahrbar ist und das Fahrzeug (12) und der Wagen (9a) jeweils mindestens eine Kupplungseinrichtung aufweisen, mittels welcher das Fahrzeug (12) an den Wagen (9a) ankuppelbar ist.

2. Transportanlage nach Anspruch 1, **dadurch gekennzeichnet, dass** das Beschickungsgeleise (4) unterflur angeordnet ist und das Fahrzeug (12) unterflur auf demselben verfahrbar ist.

3. Transportanlage nach Anspruch 1 oder 2, **dadurch gekennzeichnet, dass** der Geleiseabschnitt (7) durch die Schiebebühne (5) durchgehend ausgebildet ist und auf der der Zufuhrseite abgewandten Seite an die Schiebebühne (5) ein Abstellgeleise (8) anschliesst, das mit dem Beschickungsgeleise (4) fluchtet.

4. Transportanlage nach einem der Ansprüche 1 bis 3, **dadurch gekennzeichnet, dass** sie mehrere Schiebebühnen (5) und parallele Beschickungsgeleise (4) umfasst sowie ein von einem Papierrollenlager zu den Beschickungsgeleisen (4) führendes Zubringgeleise (2), mit welchem die Beschickungsgeleise (4) jeweils durch eine Drehscheibe (3) verbunden sind.

5. Transportanlage nach einem der Ansprüche 2 bis 4, **dadurch gekennzeichnet, dass** das Fahrzeug (12) mindestens zwei Paaren von Rädern (14, 15), von denen mindestens ein Paar von Rädern (14) zum Verfahren des Fahrzeugs (12) antreibbar ist und mindestens eine Kupplungseinrichtung zur lösbaren Ankupplung des Fahrzeugs (12) an einen Wagen (9) aufweist sowie mindestens ein Paar von Anpressrädern (23), das im unbelasteten Zustand über die Paare von Rädern (14, 15) hinausragt und gegen eine Rückstellkraft nach unten verschiebbar ist.

6. Transportanlage nach Anspruch 5, **dadurch gekennzeichnet, dass** die mindestens eine Kupplungseinrichtung als ein- und ausschaltbares elektromagnetisches Kupplungselement (24) ausgebildet ist.

7. Transportanlage nach Anspruch 5 oder 6, **dadurch gekennzeichnet, dass** die mindestens eine Kupplungseinrichtung (24) pufferartig ausgebildet ist.

8. Transportanlage nach einem der Ansprüche 5 bis 7, **dadurch gekennzeichnet, dass** das Fahrzeug (12) an jedem Ende eine Kupplungseinrichtung aufweist.

9. Transportanlage nach einem der Ansprüche 5 bis 8, **dadurch gekennzeichnet, dass** jeder Kupplungseinrichtung ein Sensor zugeordnet ist zur Feststellung eines allfälligen angekuppelten Wagens (9).

10. Transportanlage nach Anspruch 9, **dadurch gekennzeichnet, dass** der Sensor als Taster (25) ausgebildet ist.

11. Verfahren zum Betrieb einer Transportanlage nach einem der Ansprüche 1 bis 10, bei welchem ein mit einer Papierrolle (10) beladener Wagen (9a) von einem Warteplatz über das Beschickungsgeleise (4) auf die Schiebebühne (5), welche sich in der Uebernahmeposition befindet, verfahren und anschliessend zur Uebergabe der Papierrolle (10) an den Rollenständer (6) die Schiebebühne (5) mit dem Wagen (9a) unter den Rollenständer (6) verschoben und die Papierrolle (10) vom Wagen (9a) abgehoben wird und dann die Schiebebühne (5) wieder in die Uebernahmeposition verschoben wird, worauf der Wagen (9a) zurück auf den Warteplatz verfahren wird, **dadurch gekennzeichnet, dass** zum Verfahren desselben auf die Schiebebühne (5) am derselben zugewandten Ende des Wagens (9a) ein angetriebenes Fahrzeug (12) angekuppelt wird, welches daraufhin den Wagen (9a) auf die Schiebebühne (5) zieht und nach Uebergabe der Papierrolle (10) an den Rollenständer (6) zurück auf den Warteplatz schiebt.

12. Verfahren nach Anspruch 11 zum Betrieb einer Transportanlage nach einem der Ansprüche 3 bis 10, **dadurch gekennzeichnet, dass** vor der Uebergabe der Papierrolle (10) an den Rollenständer (6) das Fahrzeug (12) vom Wagen (9a) abgekuppelt und auf das Abstellgeleise (8) verfahren wird.

13. Verfahren nach Anspruch 11 zum Betrieb einer Transportanlage nach einem der Ansprüche 3 bis 10 oder Verfahren nach Anspruch 12, **dadurch gekennzeichnet, dass** vor dem Verfahren des Wagens (9a) vom Warteplatz auf die Schiebebühne (5) das Fahrzeug (12) an einen auf dem Abstellgeleise (8) stehenden mit einem Hülsenkorb (11) beladenen Wagen (9b) angekuppelt wird, welches daraufhin denselben auf die Schiebebühne (5), welche sich in der Uebernahmeposition befindet, zieht und anschliessend zur Uebernahme einer Hülse (38) vom Rollenständer (6) die Schiebebühne (5) mit dem Wagen (9b) unter den Rollenständer (6) verschoben und die Hülse (38) in den Hülsenkorb (11) abgeworfen wird und die Schiebebühne (5) wieder in die Uebernahmeposition verschoben wird, worauf der Wagen (9b) durch das Fahrzeug (12) zurück auf das Abstellgeleise (8) geschoben und das Fahrzeug (12) abgekuppelt wird.

14. Verfahren nach Anspruch 13, **dadurch gekennzeichnet, dass** vor der Uebernahme der Hülse (38) vom Rollenständer (6) das Fahrzeug (12) vom Wagen (9b) abgekuppelt und auf das Beschickungsgeleise (4) verfahren wird.

## Claims

1. Transport installation for feeding paper reels to at least one reel stand (6), comprising at least one sliding platform (5) having a track section (7) and a loading track (4) which leads from a feed side to the sliding platform (5) and with which the track section (7) is flush when the sliding platform (5) is in a transfer position, and comprising at least one nondriven carriage (9a) for receiving a paper reel (10), **characterized in that** it comprises at least one driven vehicle (12) which is capable of travelling on the loading track (4) and the track section (7), and the vehicle (12) and the carriage (9a) each have at least one coupling device by means of which the vehicle (12) can be coupled to the carriage (9a).

2. Transport installation according to Claim 1, **characterized in that** the loading track (4) is arranged underfloor and the vehicle (12) is capable of travelling underfloor thereon.

3. Transport installation according to Claim 1 or 2, **characterized in that** the track section (7) is formed continuously through the sliding platform (5) and, on the side facing away from the feed side, a storage track (8) which is flush with the loading track (4) is adjacent to the sliding platform (5).

4. Transport installation according to any of Claims 1 to 3, **characterized in that** it comprises a plurality of sliding platforms (5) and parallel loading tracks (4) and a feed track (2) which leads from a paper reel store to the loading tracks (4) and to which the loading tracks (4) are each connected by a turntable (3).

5. Transport installation according to any of Claims 2 to 4, **characterized in that** the vehicle (12) has at least two pairs of wheels (14, 15), of which at least one pair of wheels (14) is drivable for moving the vehicle (12), and having at least one coupling means for the detachable coupling of the vehicle (12) to a carriage (9), it has at least one pair of pressure wheels (23) which, in the unloaded state, projects beyond the pairs of wheels (14, 15) and can be pushed downwards against a restoring force.

6. Transport installation according to Claim 5, **characterized in that** the at least one coupling means is in the form of an electromagnetic coupling element (24) which can be switched on and off.

7. Transport installation according to Claim 5 or 6, **characterized in that** the at least one coupling means (24) is in the form of a buffer.

8. Transport installation according to any of Claims 5 to 7, **characterized in that** it has a coupling means at each end.

9. Transport installation according to any of Claims 5 to 8, **characterized in that** a sensor for detecting any coupled carriage (9) is coordinated with each coupling means.

10. Transport installation according to Claim 9, **characterized in that** the sensor is in the form of a switch (25).

11. Method for operating a transport installation according to any of Claims 1 to 10, in which a carriage (9a) loaded with a paper reel (10) is moved from a waiting station via the loading track (4) onto the sliding platform (5), which is present in the transfer position, and then, for transferring the paper reel (10) to the reel stand (6), the sliding platform (5) with the carriage (9a) is moved under the reel stand (6) and the paper reel (10) is raised from the carriage (9a) and the sliding platform (5) is then moved back to the transfer position, whereupon the carriage (9a) is moved back to the waiting station, **characterized in that**, for moving said carriage onto the sliding platform (5), a driven vehicle (12) is coupled to that end of the carriage (9a) which faces said sliding platform and said vehicle then pulls the carriage (9a) onto the sliding platform (5) and, after transfer of the paper reel (10) to the reel stand (6), pushes said carriage back to the waiting station.

12. Method according to Claim 11 for operating a transport installation according to any of Claims 3 to 10, **characterized in that**, before transfer of the paper reel (10) to the reel stand (6), the vehicle (12) is uncoupled from the carriage (9a) and is moved onto the storage track (8).

13. Method according to Claim 11 for operating a transport installation according to any of Claims 3 to 10 or method according to Claim 12, **characterized in that**, before the carriage (9a) is moved from the waiting station onto the sliding platform (5), the vehicle (12) is coupled to a carriage (9b) standing on the storage track (8) and loaded with a reel core basket (11), which vehicle then pulls said carriage (9b) onto the sliding platform (5), which is present in the transfer position and then, for transferring a reel core (38) from the reel stand (6), the sliding platform (5) with the carriage (9b) is moved under the reel stand (6) and the reel core (38) is ejected into the reel core basket (11) and the sliding platform (5) is moved back to the transfer position, whereupon the carriage (9b) is pushed back onto the storage track (8) by the vehicle (12) and the vehicle (12) is uncoupled.

14. Method according to Claim 13, **characterized in that**, before transfer of the reel core (38) from the reel stand (6), the vehicle (12) is uncoupled from the carriage (9b) and is moved onto the loading track (4).

## Revendications

1. Installation de transport pour amener des rouleaux en papier à au moins un support de rouleau (6), avec au moins un pont transbordeur (5), lequel présente un segment de voie (7), et une voie de chargement (4) allant d'un côté d'amenée au pont transbordeur (5) et avec laquelle le segment de voie (7) est aligné quand le pont transbordeur (5) se trouve en position de transfert, ainsi qu'avec au moins un wagonnet sans entraînement (9a) destiné à recevoir un rouleau en papier (10), **caractérisée en ce qu'**elle comprend au moins un chariot entraîné (12) déplaçable sur la voie de chargement (4) et sur le segment de voie (7) et que le chariot (12) et le wagonnet (9a) présentent respectivement au moins un dispositif d'attelage, au moyen duquel le chariot (12) est attelable au wagonnet (9a).

2. Installation de transport selon la revendication 1, **caractérisée en ce que** la voie de chargement (4) est enterrée et le chariot (12) est déplaçable sur celle-ci dans le sol.

3. Installation de transport selon la revendication 1 ou 2, **caractérisée en ce que** le segment de voie (7) traverse d'un seul tenant le pont transbordeur (5), et que du côté opposé au côté d'amenée une voie de garage (8) est raccordée au pont transbordeur (5), ladite voie de garage étant alignée avec la voie de chargement (4).

4. Installation de transport selon l'une des revendications 1 à 3, **caractérisée en ce qu'**elle comprend plusieurs ponts transbordeurs (5) et voies de chargement parallèles (4) ainsi qu'une voie distributrice (2) qui va d'un magasin de rouleaux en papier aux voies de chargement (4) et à laquelle les voies de chargement (4) sont reliées respectivement par un plateau tournant (3).

5. Installation de transport selon l'une des revendications 2 à 4, **caractérisée en ce que** le chariot (12) présente au moins deux paires de roues (14, 15), dont au moins une paire de roues (14) est entraînable pour le déplacement du chariot (12), et au moins un dispositif d'attelage pour l'attelage amovible du chariot (12) à un wagonnet (9), ainsi qu'au moins une paire de roues de pression (23), qui dans l'état non chargé dépasse au-delà des paires de roues (14, 15) et est déplaçable vers le bas contre une force de rappel.

6. Installation de transport selon la revendication 5, **caractérisée en ce que** l'au moins un dispositif d'attelage se présente sous forme d'un élément d'attelage électromagnétique (24) branchable et débranchable.

7. Installation de transport selon la revendication 5 ou 6, **caractérisée en ce que** l'au moins un dispositif d'attelage (24) est de type tampon.

8. Installation de transport selon l'une des revendications 5 à 7, **caractérisée en ce que** le chariot (12) présente à chaque extrémité un dispositif d'attelage.

9. Installation de transport selon l'une des revendications 5 à 8, **caractérisée en ce qu'**un capteur est affecté à chaque dispositif d'attelage, pour détecter un éventuel wagonnet (9) attelé.

10. Installation de transport selon la revendication 9, **caractérisée en ce que** le capteur se présente sous forme d'un palpeur (25).

11. Procédé pour le fonctionnement d'une installation de transport selon l'une des revendications 1 à 10, dans lequel un wagonnet (9a) chargé d'un rouleau en papier (10) est déplacé à partir d'une place d'attente, en passant par la voie de chargement (4), jusque sur le pont transbordeur (5), lequel se trouve en position de transfert, après quoi, pour le transfert du rouleau en papier (10) au support de rouleau (6), le pont transbordeur (5) avec le wagonnet (9a) est déplacé jusque sous le support de rouleau (6) et le rouleau en papier (10) est soulevé du wagonnet (9a) et ensuite le pont transbordeur (5) est replacé en position de transfert, après quoi le wagonnet (9a) est ramené jusque sur la place d'attente, **caractérisé en ce que** pour le déplacement dudit wagonnet jusque sur le pont transbordeur (5), un chariot entraîné (12) est attelé à l'extrémité du wagonnet (9a) orientée vers le pont transbordeur, après quoi le chariot tracte le wagonnet (9a) jusque sur le pont transbordeur (5) et, après que le rouleau en papier (10) a été transféré au support de rouleau (6), le chariot ramène ledit wagonnet jusque sur la place d'attente.

12. Procédé selon la revendication 11 pour le fonctionnement d'une installation de transport selon l'une des revendications 3 à 10, **caractérisé en ce que**, avant le transfert du rouleau en papier (10) au support de rouleau (6), le chariot (12) est dételé du wagonnet (9a) et est déplacé jusque sur la voie de garage (8).

13. Procédé selon la revendication 11 pour le fonctionnement d'une installation de transport selon l'une des revendications 3 à 10 ou procédé selon la revendication 12, **caractérisé en ce que**, avant le déplacement du wagonnet (9a) de la place d'attente au pont transbordeur (5), le chariot (12) est attelé à un wagonnet (9b) situé sur la voie de garage (8) et chargé d'un panier à mandrins (11), après quoi le chariot tracte ledit wagonnet jusque sur le pont transbordeur (5), lequel se trouve en position de transfert, et ensuite, pour le transfert d'un mandrin (38) à partir du support de rouleau (6), le pont transbordeur (5) avec le wagonnet (9b) est déplacé jusque sous le support de rouleau (6) et le mandrin (38) est largué dans le panier à mandrins (11) et le pont transbordeur (5) est replacé en position de transfert, après quoi le wagonnet (9b) est ramené par le chariot (12) jusque sur la voie de garage (8) et le chariot (12) est dételé.

14. Procédé selon la revendication 13, **caractérisé en ce que**, avant le transfert du mandrin (38) à partir du support de rouleau (6), le chariot (12) est dételé du wagonnet (9b) et est déplacé jusque sur la voie de chargement (4).
